Europäisches Patentamt

European Patent Office

Office européen des brevets

(11) Numéro de publication: **0 459 897 B1**

(12) **FASCICULE DE BREVET EUROPEEN**

(45) Date de publication de fascicule du brevet: **19.04.95**
(51) Int. Cl.⁶: **C03C 13/06**, C03C 3/087, C03C 3/097

(21) Numéro de dépôt: **91401394.1**

(22) Date de dépôt: **30.05.91**

(54) **Fibres minérales susceptibles de se décomposer en milieu physiologique.**

(30) Priorité: **01.06.90 FR 9006841**

(43) Date de publication de la demande:
**04.12.91 Bulletin 91/49**

(45) Mention de la délivrance du brevet:
**19.04.95 Bulletin 95/16**

(84) Etats contractants désignés:
**AT BE CH DE DK ES FR GB GR IT LI LU NL SE**

(56) Documents cités:
**EP-A- 0 009 418**
**EP-A- 0 247 817**
**US-A- 2 663 051**

**CHEMICAL ABSTRACTS, vol. 92, no. 8, juin 1980 Columbus, Ohio, USA page 259;colonne de gauche; ref. no. 202476V &FI-A-56820 (PA-RAISTEN KALKKI OY ET AL) 31.12.1979**

**DERWENT PUBLICATIONS, LTD., LONDON, GB; DATABASE WPIL, ACCESSION No. 83-58282K,DW8324; & SU-A-947112 (HEAT IN-SUL ACOUSTIC) 30.07.1982**

(73) Titulaire: **ISOVER SAINT-GOBAIN**
**Les Miroirs**
**18, avenue d'Alsace**
**F-92400 Courbevoie (FR)**

(72) Inventeur: **Thelohan, Sylvie**
**5, rue Georges Saché**
**F-75014 Paris (FR)**
Inventeur: **De Meringo, Alain**
**9, rue Perdonnet**
**F-75010 Paris (FR)**
Inventeur: **Furtak, Hans**
**Im Oberkämmerer 35**
**D-Speyer am Rhein (DE)**
Inventeur: **Holstein, Wolfgang**
**Herderstrasse 2**
**D-6313 Homberg (DE)**

(74) Mandataire: **Breton, Jean-Claude et al**
**SAINT-GOBAIN RECHERCHE**
**39, quai Lucien Lefranc**
**F-93300 Aubervilliers Cedex (FR)**

Rank Xerox (UK) Business Services
(3.10/3.09/3.3.3)

DERWENT PUBLICATIONS, LTD., LONDON, GB; DATABASE WPI, ACCESSION No. 77-41204Y,DW7723; & SU-A-525634 (GRUZ-NIISTROM COMBIN) 26.10.1976

**EP 0 459 897 B1**

**Description**

La présente invention concerne le domaine des fibres minérales ; elle vise plus précisément des fibres minérales dont la composition est telle qu'elles se dégradent dès qu'elles sont en contact d'un milieu physiologique.

L'isolation thermique et acoustique des bâtiments est souvent réalisée à partir de produits constitués pour l'essentiel de laine minérale, telle que la laine de roche. La configuration particulière des lieux à isoler conduit souvent les personnes chargées de la pose de ces produits à les découper sur place. Cette opération provoque la rupture des fibres et, éventuellement, la dispersion de certaines d'entre elles dans l'atmosphère. Il s'ensuit que, parfois, une fibre peut être inhalée accidentellement.

Bien que la nocivité des fibres inhalées n'ait pas été démontrée, le besoin se fait sentir de rassurer les utilisateurs en leur proposant un produit susceptible de se dissoudre facilement dans un milieu physiologique.

Le but de la présente invention est de proposer des fibres minérales dont la composition est telle qu'elles se dégradent rapidement en contact d'un milieu physiologique.

La présente invention a notamment pour objet des fibres susceptibles d'être obtenues par les techniques traditionnelles de centrifugation externe.

Ces techniques sont utilisées pour fibrer des verres obtenus par fusion de matières premières telles que des basaltes ou des laitiers de haut fourneau. Certaines de ces techniques, dites encore de centrifugation libre, consistent à déverser un filet de verre fondu sur la bande périphérique d'une roue de centrifugation, tournant à grande vitesse autour d'un axe perpendiculaire à la direction du filet de verre. Sous l'effet de la force centrifuge, une partie du verre est transformée en fibres, le reste étant renvoyé vers une autre roue où le même phénomène se produit ; trois ou quatre roues peuvent être ainsi interposées sur le trajet du verre fondu.

Les buts de l'invention sont atteints en modifiant des compositions verrières connues utilisées dans les techniques de centrifugation libre. A partir de telles compositions, comprenant pour l'essentiel de la silice, de l'alumine, des oxydes alcalino-terreux, les inventeurs ont découvert que l'addition de pentoxyde de phosphore permet d'obtenir des verres qui, sous forme de fibres, se dégradent rapidement en milieu physiologique.

Les verres selon l'invention possèdent par ailleurs des propriétés qui, pour les principales d'entre elles, sont proches de celles des verres connus. C'est ainsi qu'ils peuvent être transformés en fibres en utilisant les roues de centrifugation classiques.

Les fibres minérales selon l'invention présentent une composition qui renferme les constituants ci-après, dans les proportions pondérales définies par les limites suivantes :

| | |
|---|---|
| $SiO_2$ | 37 à 58 % |
| $Al_2O_3$ | 3 à 14 % |
| $CaO$ | 7 à 40 % |
| $MgO$ | 4 à 16 % |
| $P_2O_5$ | 1 à 10 % |
| $Fe_2O_3$ | 0 à 15 % |

la somme $CaO + MgO + Fe_2O_3$ demeurant supérieure à 25 %, ainsi que les oxydes $Na_2O$ et $K_2O$ dont la somme demeure inférieure à environ 7 %. La totalité du fer contenu dans la composition selon l'invention est exprimée sous forme d'oxyde ferrique.

Les compositions ainsi définies peuvent être élaborées à partir de constituants purs, mais sont généralement obtenues par fusion d'un mélange de matières premières vitrifiables apportant éventuellement d'autres oxydes tel que l'oxyde de titane et l'oxyde de manganèse, considérés dans le cadre de l'invention comme des impuretés. La teneur totale de ces impuretés demeure inférieure ou égale à environ 3 % en poids.

Pour pouvoir être utilisées dans les techniques de centrifugation externe, les compositions selon l'invention présentent avantageusement une viscosité adéquate à une température relativement basse. Ceci dépend en grande partie de la somme totale des oxydes $SiO_2$ et $Al_2O_3$. Dans le cadre de l'invention, la somme de ces oxydes est généralement égale ou supérieure à environ 50 % en poids.

D'autre part, la production des fibres est conditionnée par la plus ou moins grande aptitude du verre à développer des cristaux dans sa masse. Ce phénomène, dit de dévitrification, est caractérisé par plusieurs températures : celle à laquelle la vitesse de croissance des cristaux est maximale et celle à laquelle cette

3

EP 0 459 897 B1

vitesse de croissance devient nulle (liquidus).

Pour une large part, ce phénomène est plus ou moins accentué en fonction de la somme totale des oxydes alcalino-terreux. Dans le cadre de l'invention, cette somme demeure inférieure à environ 40 % en poids.

Pour assurer une bonne tenue des fibres à la chaleur, il est souhaitable que la somme $CaO + MgO + Fe_2O_3$ demeure supérieure à environ 25 % en poids.

Le domaine des compositions préférées selon l'invention est délimité par les proportions pondérales suivantes:

| | |
|---|---|
| $SiO_2$ | 45 à 57 % |
| $Al_2O_3$ | 3 à 6 % |
| $CaO$ | 20 à 30 % |
| $MgO$ | 6 à 16 % |
| $Fe_2O_3$ | 0,1 à 4 % |
| $P_2O_5$ | 1 à 7 % |
| $Na_2O + K_2O$ | 0,1 à 5 % |
| impuretés | $\leq 3$ % |

Un autre domaine des compositions selon l'invention est défini par les proportions pondérales suivantes :

| | |
|---|---|
| $SiO_2$ | 39 à 50 % |
| $Al_2O_3$ | 7 à 13 % |
| $CaO$ | 20 à 30 % |
| $MgO$ | 6 à 16 % |
| $Fe_2O_3$ | 0,1 à 4 % |
| $P_2O_5$ | 3 à 9 % |
| $Na_2O + K_2O$ | 0,1 à 5 % |
| impuretés | $\leq 3$ % |

Les avantages de l'invention sont mis en évidence dans la description ci-après, illustrée de quelques exemples non limitatifs.

Les mesures du degré de décomposition en milieu physiologique ont été effectuées sur des fibres dont le diamètre est constant et égal à environ 10 micromètres.

Ces fibres sont plongées dans une solution qui simule un fluide extracellulaire et dont la composition est la suivante (exprimée en g/l) :

| | |
|---|---|
| $MgCl_2.6H_2O$ | 0,212 |
| $NaCl$ | 6,415 |
| $Na_2HPO_4$ | 0,148 |
| $Na_2SO_4.2H_2O$ | 0,179 |
| $CaCl_2.4H_2O$ | 0,318 |
| $NaHCO_3$ | 2,703 |
| $(Na_2$ tartrate$).2H_2O$ | 0,180 |
| $(Na_3$ citrate$).5,5H_2O$ | 0,186 |
| Na lactate | 0,175 |
| Na pyruvate | 0,172 |
| Glycine | 0,118 |

Les conditions expérimentales choisies pour déterminer le degré de décomposition des fibres de verre dans cette solution sont les suivantes : deux cents milligrammes de fibres sont placées entre deux disques perforés, séparés par une bague circulaire. Ces deux disques, d'un diamètre de 4,3 centimètres, sont recouverts d'un filtre en polycarbonate. Cet ensemble constitue une cellule de mesure à travers laquelle circule la solution dont le débit est réglé par une pompe péristaltique. Ce débit est de 40 millilitres par jour, la durée du test étant de 20 jours. La cellule et le flacon contenant la solution d'attaque sont maintenus à

4

37° C. Après avoir traversé la cellule, la solution d'attaque est recueillie dans des bouteilles pour être analysée ultérieurement.

Par analyse on mesure la quantité de silice passée en solution ; le poids de silice dissoute rapporté au poids de silice initialement présente dans la fibre donne un résultat en pourcent, qui est un bon indicateur de la capacité de la fibre testée à se dégrader en milieu physiologique.

Les compositions testées et les résultats obtenus sont exposés dans les tableaux n° 1 et 2 en annexe.

Dans le tableau 1 figurent des compositions illustrant l'invention et deux compositions connues servant de référence (verre n° 1 et 4).

La présence de pentoxyde de phosphore, dans les compositions selon l'invention, a toujours pour conséquence une augmentation de la quantité de silice dissoute dans la solution d'attaque des fibres obtenues à partir desdites compositions, comparativement aux fibres dont la composition ne renferme pratiquement pas de phosphore.

Le tableau 2 rassemble quelques résultats expérimen-taux à l'appui de cette affirmation.

La comparaison entre les verres n° 1 et 3 d'une part, et les verres n° 4 et 6 d'autre part, montre que la diminution de l'alumine au profit de la silice a pour effet de favoriser la décomposition des fibres testées.

La comparaison entre les verres n° 2 et 3, ainsi qu'entre les verres n° 5 et 6, montre que dans des verres dont le degré de décomposition n'est pas négligeable, la substitution du pentoxyde de phosphore à la silice provoque une augmentation remarquable du degré de décomposition des fibres testées.

L'influence du pentoxyde de phosphore sur le degré de décomposition des fibres reste encore tout à fait appréciable dans un verre à forte teneur en alumine ainsi que le montre les verres n° 4 et 7.

Le phosphore est apporté dans le mélange vitrifiable sous forme, par exemple, de phosphate disodique ou de phosphate de calcium. Lorsque la quantité de phosphate introduite dans le mélange vitrifiable est relativement importante, sa fusion peut être parfois difficile. C'est la raison pour laquelle la teneur en pentoxyde de phosphore, dans les compositions demeure égale ou inférieure à environ 10 % en poids.

Les compositions selon l'invention, qui présentent à la fois des caractéristiques de viscosité et de dévitrification appropriées au procédé de fibrage par centrifugation externe, et, à l'état de fibres, une grande vitesse de décomposition en milieu physiologique, comprennent environ moins de 7 % en poids d'oxydes alcalins.

Les fibres minérales selon l'invention exposées dans le tableau n° 1 sont toutes résistantes à une température d'environ 700°C. Il a été trouvé que des échantillons cubiques de ces fibres (100 kg/m$^3$) chauffés dans un four pendant 30 minutes présentent un affaissement inférieur à 10 % à 700°C.

Les verres selon l'invention peuvent être transformés en fibres à partir de dispositifs de centrifugation externe connus, comme ceux décrits par exemple dans les brevets US-A-2.663.051, EP-A-0.167.508 ou FR-A-2.609.708.

Les fibres ainsi obtenues permettent d'obtenir des produits fibreux d'excellente qualité aptes à de nombreuses applications. Ainsi, par exemple, les fibres selon l'invention sont avantageusement utilisées sous la forme de panneaux géométriquement bien définis, rigidifiés par un liant polymérisé, ou sous la forme de produits tubulaires destinés à isoler les canalisations. Les fibres selon l'invention peuvent être utilisées également sous forme de matelas cousus sur du carton ou du grillage métallique, sous forme de bourrelet, ou même en vrac par remplissage.

TABLEAU N° 1

| Compositions en pourcentages pondéraux | | | | | | | | |
|---|---|---|---|---|---|---|---|---|
| Constituants | Verre n°1 | Verre n°2 | Verre n°3 | Verre n°4 | Verre n°5 | Verre n°6 | Verre n°7 | Verre n°8 |
| $SiO_2$ | 47,1 | 49,9 | 56,4 | 45,7 | 49,7 | 52;7 | 39,7 | 44,9 |
| $Fe_2O_3$ | 12,9 | 12,9 | 12,9 | 2,1 | 2,1 | 2,1 | 2,1 | 10 |
| $Al_2O_3$ | 13,8 | 4,5 | 4,5 | 11,5 | 4,5 | 4,5 | 11,5 | 4,5 |
| $CaO$ | 10,3 | 10,3 | 10,3 | 29,5 | 29,5 | 29,5 | 29,5 | 29,5 |
| $MgO$ | 9,1 | 9,1 | 9,1 | 7,4 | 7,4 | 7,4 | 7,4 | 7,4 |
| $Na_2O$ | 2,7 | 2,7 | 2,7 | 1,4 | 1,4 | 1,4 | 1,4 | 1,4 |
| $K_2O$ | 1,2 | 1,2 | 1,2 | 1,3 | 1,3 | 1,3 | 1,3 | 1,3 |
| $P_2O_5$ | 0,3 | 6,5 | 0,3 | 0,1 | 3 | 0,2 | 6 | 3 |
| impuretés | 2,6 | 2,9 | 2,6 | 1 | 1,1 | 0,9 | 1,1 | 0,7 |

## TABLEAU N° 2

### Résistance chimique en milieu physiologique

### Quantité de $SiO_2$ dissoute (en pourcent)

| temps d'attaque | Verre n°1 | Verre n°2 | Verre n°3 | Verre n°4 | Verre n°5 | Verre n°6 | Verre n°7 | Verre n°8 |
|---|---|---|---|---|---|---|---|---|
| 20 jours | 0,7 | 5,1 | 2,5 | 0,9 | 11,4 | 5,2 | 2,6 | 5,3 |

**Revendications**

1. Fibre minérale susceptible de se décomposer en présence d'un milieu physiologique, **caractérisée en ce qu'**elle comprend, outre des impuretés dont la teneur pondérale globale est inférieure ou égale à environ 3 %, les constituants suivants selon les proportions pondérales suivantes:

| | |
|---|---|
| $SiO_2$ | 37 à 58 % |
| $Al_2O_3$ | 3 à 14 % |
| $CaO$ | 7 à 40 % |
| $MgO$ | 4 à 16 % |
| $P_2O_5$ | 1 à 10 % |
| $Fe_2O_3$ | 0 à 15 % (fer total exprimé sous cette forme) |

la somme $CaO + MgO + Fe_2O_3$ demeurant supérieure à 25 %, ainsi que les oxydes $Na_2O$ et $K_2O$ dont la somme des pourcentages reste inférieure à 7 %.

2. Fibre minérale selon la revendication 1, **caractérisée en ce que** la somme de $SiO_2 + Al_2O_3$ est supérieure à environ 50 %.

**3.** Fibre minérale selon l'une des revendications 1 et 2, **caractérisée en ce que** la somme de CaO + MgO demeure inférieure à environ 40 %.

**4.** Fibre minérale selon l'une des revendications précédentes, **caractérisée en ce qu'**elle comprend :

| | |
|---|---|
| $SiO_2$ | 45 à 57 % |
| $Al_2O_3$ | 3 à 6 % |
| CaO | 20 à 30 % |
| MgO | 6 à 16 % |
| $Fe_2O_3$ | 0,1 à 4 % |
| $P_2O_5$ | 1 à 7 % |
| $Na_2O + K_2O$ | 0,1 à 5 % |

**5.** Fibre minérale selon l'une des revendications 1 à 3, **caractérisée en ce qu'**elle comprend :

| | |
|---|---|
| $SiO_2$ | 40 à 50 % |
| $Al_2O_3$ | 7 à 13 % |
| CaO | 20 à 30 % |
| MgO | 6 à 16 % |
| $Fe_2O_3$ | 0 à 4 % |
| $P_2O_5$ | 3 à 9 % |
| $Na_2O + K_2O$ | 0,1 à 5 % |

**6.** Produit destiné à l'isolation thermique et/ou acoustique et constitué au moins en partie de fibres minérales, **caractérisé en ce que** lesdites fibres présentent une composition chimique telle que définie par l'une quelconque des revendications précédentes.

**Claims**

**1.** Mineral fibre which can decompose in the presence of a physiological medium, characterised in that, in addition to impurities of which the total weight content is less than or equal to approximately 3%, it comprises the following constituents according to the following weight proportions:

| | |
|---|---|
| $SiO_2$ | 37 to 58% |
| $Al_2O_3$ | 3 to 14% |
| CaO | 7 to 40% |
| MgO | 4 to 16% |
| $P_2O_5$ | 1 to 10% |
| $Fe_2O_3$ | 0 to 15% (total iron expressed in this form) |

the amount of CaO + MgO + $Fe_2O_3$ being greater than 25%, and the oxides $Na_2O$ and $K_2O$, of which the total percentage is less than 7%.

**2.** Mineral fibre according to Claim 1, characterised in that the amount of $SiO_2$ + $Al_2O_3$ is greater than approximately 50%.

**3.** Mineral fibre according to either of Claims 1 and 2, characterised in that the amount of CaO + MgO is less than approximately 40%.

**4.** Mineral fibre according to any one of the preceding claims, characterised in that it comprises:

| | |
|---|---|
| SiO$_2$ | 45 to 57% |
| Al$_2$O$_3$ | 3 to 6% |
| CaO | 20 to 30% |
| MgO | 6 to 16% |
| Fe$_2$O$_3$ | 0.1 to 4% |
| P$_2$O$_5$ | 1 to 7% |
| Na$_2$O + K$_2$O | 0.1 to 5% |

5. Mineral fibre according to any one of Claims 1 to 3, characterised in that it comprises:

| | |
|---|---|
| SiO$_2$ | 40 to 50% |
| Al$_2$O$_3$ | 7 to 13% |
| CaO | 20 to 30% |
| MgO | 6 to 16% |
| Fe$_2$O$_3$ | 0 to 4% |
| P$_2$O$_5$ | 3 to 9% |
| Na$_2$O + K$_2$O | 0.1 to 5% |

6. Product for heat and/or sound insulation and consisting at least partially of mineral fibres, characterised in that fibres have a chemical composition as defined by any one of the preceding claims.

**Patentansprüche**

1. Mineralfaser, dazu geeignet, sich in Gegenwart eines physiologischen Milieus zu zersetzen, dadurch gekennzeichnet, daß diese neben Verunreinigungen, deren gesamter Gewichtsgehalt kleiner oder gleich etwa 3 % ist, die folgenden Bestandteile gemäß der folgenden Gewichtsverhältnisse:

| | |
|---|---|
| SiO$_2$ | 37 bis 58 % |
| Al$_2$O$_3$ | 3 bis 14 % |
| CaO | 7 bis 40 % |
| MgO | 4 bis 16 % |
| P$_2$O$_5$ | 1 bis 10 % |
| Fe$_2$O$_3$ | 0 bis 15 % (Gesamteisen durch diese Form ausgedrückt) |

wobei die Summe CaO + MgO + Fe$_2$O$_3$ 25 % nicht unterschreitet, sowie die Oxide Na$_2$O und K$_2$O, deren Summe der Prozente 7 % nicht übersteigt, umfaßt.

2. Mineralfaser gemäß Anspruch 1, dadurch gekennzeichnet, daß die Summe von SiO$_2$ und Al$_2$O$_3$ größer als etwa 50 % ist.

3. Mineralfaser gemäß Anspruch 1 oder 2, dadurch gekennzeichnet, daß die Summe von CaO + MgO etwa 40 % nicht übersteigt.

4. Mineralfaser gemäß einem der vorstehenden Ansprüche, dadurch gekennzeichnet, daß diese umfaßt:

| SiO$_2$ | 45 bis 57 % |
|---|---|
| Al$_2$O$_3$ | 3 bis 6 % |
| CaO | 20 bis 30 % |
| MgO | 6 bis 16 % |
| Fe$_2$O$_3$ | 0,1 bis 4 % |
| P$_2$O$_5$ | 1 bis 7 % |
| Na$_2$O + K$_2$O | 0,1 bis 5 % |

5. Mineralfaser gemäß einem der Ansprüche 1 bis 3, dadurch gekennzeichnet, daß diese umfaßt:

| SiO$_2$ | 40 bis 50 % |
|---|---|
| Al$_2$O$_3$ | 7 bis 13 % |
| CaO | 20 bis 30 % |
| MgO | 6 bis 16 % |
| Fe$_2$O$_3$ | 0 bis 4 % |
| P$_2$O$_5$ | 3 bis 9 % |
| Na$_2$0 + K$_2$O | 0,1 bis 5 % |

6. Produkt für die thermische und /oder akustische Isolation, das zumindest teilweise aus Mineralfasern besteht, dadurch gekennzeichnet, daß die genannten Fasern eine chemische Verbindung, wie nach einem der vorstehenden Anspruch definiert, darstellen.